**Europäisches Patentamt**

**European Patent Office**

**Office européen des brevets**

(19)

(11) Veröffentlichungsnummer : **0 458 737 A2**

## (12) EUROPÄISCHE PATENTANMELDUNG

(21) Anmeldenummer : **91810300.3**

(22) Anmeldetag : **23.04.91**

(51) Int. Cl.⁵ : **C02F 1/20, F23C 11/00**

(30) Priorität : **21.05.90 CH 1722/90**

(43) Veröffentlichungstag der Anmeldung :
**27.11.91 Patentblatt 91/48**

(84) Benannte Vertragsstaaten :
**CH DE GB LI**

(71) Anmelder : **GEBRÜDER SULZER
AKTIENGESELLSCHAFT
Zürcherstrasse 12
CH-8400 Winterthur (CH)**

(72) Erfinder : **Mandrin, Charles, Dr.
Im Laubegg 7
CH-8406 Winterthur (CH)**

(54) **Verfahren und Anlage zum Deoxidieren von Wasser.**

(57)    Das Wasser wird deoxidiert durch Stripping mit Erdgas in einer Kontakteinrichtung (3). Der mit Sauerstoff beladene Erdgasstrom wird anschliessend mit einem Katalysator (18) in Kontakt gebracht, wobei der Sauerstoff im kontinuierlichen Betrieb ohne Zugabe eines weiteres Stoffes mit Kohlenstoff und Wasserstoff chemisch verbunden und der dadurch deoxidierte Erdgasstrom einem Verbraucher (23) zugeführt wird. Dies ergibt eine einfache, sichere und kostengünstige Methode zur Deoxidierung von Meerwasser.

EP 0 458 737 A2

Fig.1

Die Erfindung betrifft in Verfahren und eine Anlage zum Deoxidieren von Wasser, insbesondere von Meerwasser, wobei das Wasser zur Entfernug seines Sauerstoffgehaltes mit Erdgas in Kontakt gebracht wird. Dieses Verfahren, das sogenannte "Natural gas stripping", ist bekannt. Dabei wird das Wasser mit dem Erdgas in Kontakt gebracht und dadurch deoxidiert. Es können Gegenstromeinrichtungen, Gleichstromkolonnen und statische Mischer verwendet werden. Das bei diesem erfahren entstehende, mit Sauerstoff beladene Erdgas wurde bisher meist verbrannt. Diese Methode weist nun aber schwere Nachteile auf. Zum einen entsteht ein laufender erlust von ungenutztem Brennstoff, und es werden zudem noch schädliche Emissionen, z.B. CO2 als Verursacher des unerwünschten Treibhauseffekts, verursacht.

Direkte Emission des mit Sauerstoff beladenen Erdgases in die Atmosphäre ohne Verbrennung wäre noch umweltfeindlicher, und es wäre auch aus Sicherheitsgründen nicht tolerierbar.

Eine andere gebräuchliche Methode zum Deoxidieren des Meerwassers besteht darin, das Wasser in einer Mehrstufenvakuumkolonne zu entgasen. Dies ist aber sehr aufwendig, denn es muss nicht nur Sauerstoff, sondern auch Stickstoff und Wasserdampf durch grosse Vakuumpumpen abgesaugt werden. Es ist zudem äusserst schwierig, das Wasser allein durch dieses Verfahren hinreichend sauerstofffrei zu machen, weil auch Luft in die Vakuumkolonne eindringen kann. Zudem müssen noch korrosive und kostspielige Chemikalien eingesetzt werden, um die letzten Sauerstoffspuren zu entfernen.

Angesichts all dieser Probleme wurde versucht, das Wasser mittels eines geschlossenen Gaskreislaufs zu deoxidieren wie dies z.B. in der EP-Anmeldung 0 327 491 beschrieben ist. Auch diese Verfahren mit geschlossenem Gaskreislauf weisen aber schwerwiegende Nachteile und Probleme auf. So sind relativ aufwendige Anlagen mit teuren Umwälzeinrichtungen mit genauen Dosiereinrichtungen und Ueberwachungseinrichtungen erforderlich, um im Kreislaufbetrieb die notwendigen Gaszusammensetzungen immer einhalten zu können und Betriebsfehler auszuschliessen. Ueberdies werden Zusatzstoffe und zugehörige, wiederum aufwendige Dosier- und Ueberwachungseinrichtungen erforderlich, und es besteht Explosionsgefahr bei unzulässigen Gaszusammensetzungen.

Die vorliegende Erfindung soll nun die beschriebenen Nachteile überwinden und eine Anlage bzw. ein Verfahren schaffen, welches ohne Umweltschädigung und Energieverschwendung eine einfache, sichere und kostengünstige Deoxidierung von Wasser, insbesondere von Meerwasser ermöglicht.

Diese Aufgabe wird erfindungsgemäss gelöst durch das Verfahren nach Anspruch 1 und eine Anlage gemäss Anspruch 8. Die abhängigen Ansprüche betreffen vorteilhafte Weiterbildungen von Verfahren und Anlage.

Der grundlegende Vorteil der Erfindung liegt in der Einfachheit und damit auch der Betriebssicherheit des Verfahrens. Auf denkbar einfachste Art wird dadurch der Sauerstoff aus dem Wasser entfernt. Eine Zugabe von weiteren Stoffen im kontinuierlichen Betrieb ist zur Deoxidation nicht notwendig. Dadurch entfallen auch die entsprechenden aufwendigen und defektanfälligen Ueberwachungs-, Dosier und Steuereinrichtungen, welche die bisherigen komplexeren Systeme erfordern.

Geeignete Kontakteinrichtungen für Wasser und Erdgas können Gegenstromkolonnen, rotierende Packungen oder Gleichstromkontakteinrichtungen in Form von statischen Mischern oder Serpentinen sein. Eine energetisch besonders günstige Lösung bildet das Vorschalten eines Gegenstiomwärmetauschers vor den Katalysator, in welchem das eintretende, mit Sauerstoff beladene Erdgas aufgewärmt wird durch das austretende sauerstofffreie und durch die katalytische Reaktion aufgewärmte austretende Abgas. Mit einer dem Katalysator vorgeschalteten steuerbaren Heizung können auf einfache Art optimale Betriebsbedingungen eingestellt werden. Im folgenden wird die Erfindung im Zusammenhang mit den Figuren anhand von Beispielen näher erläutert. Es zeigt:

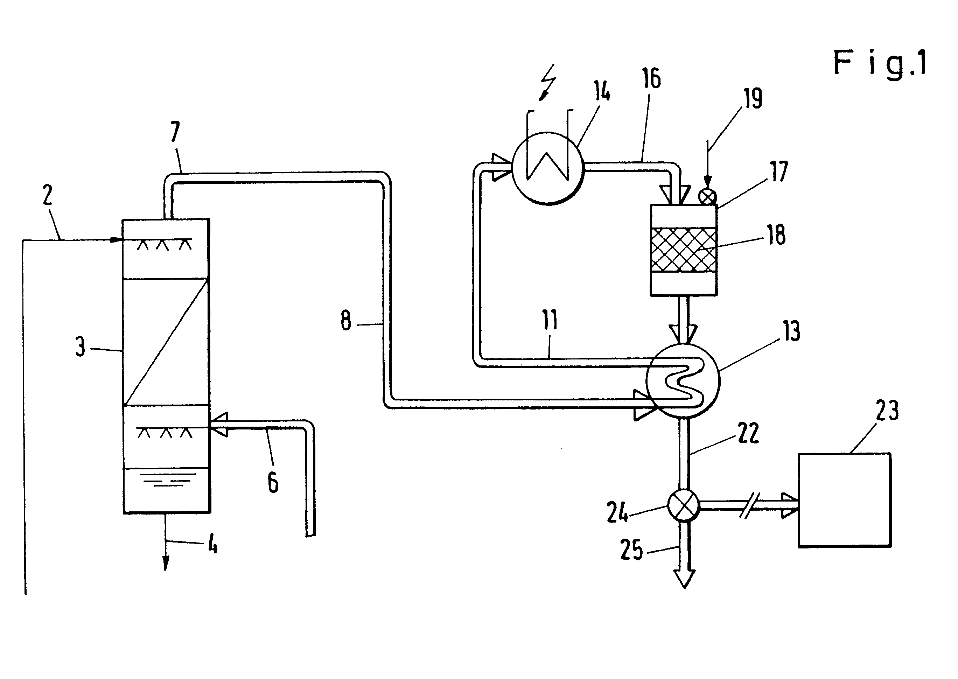

Fig. 1 eine erfindungsgemässe Anlage;

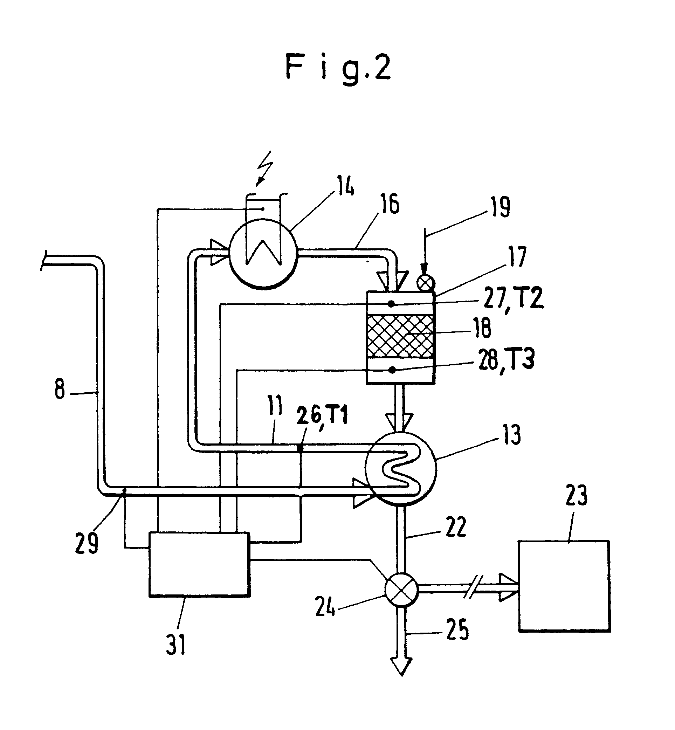

Fig. 2 eine weitere Variante.

Das mit Sauerstoff beladene Meerwasser, in dem z.B. 10 ppm 02 gelöst sind, tritt an der Einlaufstelle 2 in eine Kontakteinrichtung 3, hier in eine Gegenstromkolonne, ein und tritt an der Stelle 4 praktisch vollständig von Sauerstoff gereinigt, beispielsweise noch mit 10 ppb 02, zur weiteren Verwendung wieder aus. Natürliches Erdgas, welches immer absolut sauerstofffrei ist und dadurch eine praktisch vollständige Deoxidierung des Wassers ermöglicht, tritt an der Stelle 6 in die Kontakteinrichtung 3 ein. An der Stelle 7 verlässt das Erdgas die Kontakteinrichtung, nachdem es mit Sauerstoff beladen ist, z.B. mit 0.5 % 02. Diese Sauerstoff-Konzentration ist eine Funktion des Wasser/Gasdurchsatzverhältnisses. Ueber eine Verbindungsleitung 8 wird das Erdgas anschliessend zwecks Vorwärmung in einen Gegenstromwärmetauscher 13 geführt. Die anschliessende Leitung 11 führt das mit Sauerstoff beladene Erdgas in eine steuerbare und regelbare Heizung 14, welche hier als elektrische Heizung dargestellt ist. Das auf eine gewählte optimale Temperatur aufgeheizte Erdgas gelangt über eine Leitung 16 in Katalysatoreinrichtung 17 mit einem Katalysatorbett 18, in welchem der Sauerstoffgehalt des Erdgases katalytisch mit dem Erdgas zur Reaktion gebracht wird. Das durch diese Reaktion weiter erwärmte Erdgas fliesst durch den Wärmetauscher 13 und anschliessend in eine Verbindungsleitung 22, welche mit mindestens einem Verbraucher 23 verbunden ist. Dieser Verbraucher kann auch ein Erdgasspeicher sein. An ein Umschaltventil 24 in der Verbindungsleitung 22 ist ein weiterer Ausgang 25 angeschlossen zur allfälligen alternativen Verwendung, beispielsweise für die Entsorgung von noch nicht oxidiertem Gas während einer Anfahrphase des Deoxidationsprozesses. Das Anfahren des Prozesses und der optimale Betrieb der erfindungsgemässen Anlage kann durch eine einfache Steuereinrichtung 31, welche z.B. mit Temperatursensoren 26, 27 und 28, mit allfälligen Drucksensoren 29, dem Umschaltventil 24 und der Heizung 14 verbunden ist geregelt und gesteuert werden. Zum Anfahren der Anlage kann auch kurzfristig ein Zusatzstoff über eine Zuführleitung 19 in den Katalysator eingespiesen werden. Dies wäre jedoch nur in den relativ kurzen Zeiten eines Anfahrens nützlich, um die Temperatur am Eingang des Katalysatorbettes 18 zu reduzieren. Ein ganz wesentlicher Vorteil des Verfahrens und der Anlage ist auch, dass im Normalbetrieb keine Zuspeisungen von Hilfsstoffen wie Luft oder Methanol als Brennstoff notwendig sind. Die Regelung der Anlage wird damit wesentlich einfacher und die Betriebssicherheit beträchtlich erhöht im Vergleich zu bisher bekannten Methoden des katalytischen Deoxidierens. Es müssen hier nur die Wasser- und Gasdurchsätze geregelt werden, wobei aber eine Aenderung dieser Durchsätze keine Konsequenzen auf die Betriebssicherheit hat. Hier ist immer ein Ueberschuss an Kohlenwasserstoffen vorhanden und somit fallen dosierte Zugaben von Luft und Brennstoff wie auch Sauerstoffgehaltsmessungen der Gasphase weg.

Es genügt, das Gas mit einem geeigneten Katalysator (18) in Kontakt zu bringen, damit der Sauerstoff mit den Kohlenwasserstoffen des Erdgases reagiert unter Bildung von $H_2O$ und $CO_2$. Die heute erhältlichen Katalysatoren erlauben es nicht, eine solche Reaktion bei Raumtemperaturen durchzuführen. Es können beispielsweise Platin- oder Palladium-katalysatoren eingesetzt werden in einem Temperaturbereich von 150° bis 400°, je nach chemisch-physikalischem Aufbau von Katalysator und dessen Träger, um den Sauerstoff vollständig umzuwandeln. Die Heizung 14 dient dazu, beim Anfahren die notwendige Zündtemperatur T2 beim Sensor 27 des Katalysators zu erreichen, um anschliessend im kontinuierlichen Betrieb noch die notwendige Resterwärmung des aus dem Wärmetauscher kommenden Erdgases mit tieferer Temperatur T1 beim Sensor 26 auf eine reduzierte höhere Temperatur T2 beim Sensor 27 aufrechtzuerhalten. Die katalytische Reaktion ergibt, abhängig vom Anteil Sauerstoff im Erdgas, eine Temperaturerhöhung auf T3 beim Sensor 28, welche anschliessend im Wärmetauscher wiederum teilweise zur Vorwärmung des eintretenden Gases auf T1 genutzt wird. Die Steuerung der Heizung 14 erfolgt in Abhängigkeit der erfassten Temperaturen T1, T2, T3 so, dass immer die für die katalytische Reaktion notwendige Temperatur T2 erreicht ist.

Die steuerbare Heizung 14 kann elektrisch oder auch mit dem vorhandenen Erdgas betrieben sein. Ausgangsseitig kann das erzeugte sauerstoffreie Erdgas sowohl in Oel und Gasfeldern zur Injektion genutzt werden als auch anderen Verbrauchern meistens über Fernleitungen zugeführt werden.

Das Deoxidieren von Wasser oder Meerwasser im Austausch mit Erdgas wird oft dort eingesetzt, wo Oel und Gas gleichzeitig produziert werden. Bei solchen Oel- und Gasquellen wird meistens eine Oel-Gas-Wassermischung gewonnen, welche in einer Kaskade von Behältern getrennt wird. Beispielsweise wird der erste Trennbehälter bei 30 bar, der letzte bei 1.5 bar betrieben, wobei zwei bis vier Behälter hintereinander geschaltet sind. Das Erdgas wird aus all diesen Behältern gesammelt und auf 60 bis 300 bar komprimiert, zur Lieferung an Endverbraucher über Pipelines oder für die Injektion in Oelfeldern. Zum Deoxidieren wird das Erdgas z.B. aus dem ersten Behälter mit hohem Druck entnommen und kann dann nach der Deoxidation wieder in den letzten Behälter zurückgespeist werden. Dies ist nur durch das erfindungsgemässe Verfahren möglich, weil Sauerstoff im Erdgas weder in der Fernleitung noch für Injektionen in Oelfeldern toleriert ist. Sauerstoff erzeugt Korrosion und könnte durch Anreicherung in Kohlenwasserstoff-Behandlungsschleifen zu explosiven Gemischen führen. Abhängig von der gewünschten Nützung und vom Durchsatz des erzeugten gereinigten Erdgases können die Temperatur- und Druckverhältnisse optimiert werden.

## Bezeichnungsliste

| | |
|---|---|
| 2 | Wassereinlauf |
| 3 | Kontakteinrichtung |
| 4 | Wasserauslauf |
| 6 | Erdgaszuführung |
| 7 | Erdgasausgang von 3 |
| 8 | Verbindungsleitung zu 13 |
| 11 | Leitung zu 14 |
| 13 | Gegenstromwärmetauscher |
| 14 | elektrische Heizung |
| 16 | Gasleitung zu 17 |
| 17 | Katalysatoreinrichtung |

EP 0 458 737 A2

| | |
|---|---|
| 18 | Katalysatorbett |
| 19 | Zuführleitung für Anfahrstoffe |
| 22 | Verbindungsleitung zu 23 |
| 23 | Verbraucher |
| 24 | Umschaltventil |
| 25 | weiterer Ausgang |
| 26, 27, 28 | Temperatursensoren |
| 29 | Drucksensor |
| 31 | Steuereinrichtung |
| T1, T2, T3 | Temperaturen von 26, 27, 28 |

**Patentansprüche**

1. Verfahren zum Deoxidieren von Wasser, insbesondere Meerwasser, wobei das Wasser zur Entfernung seines Sauerstoffgehaltes mit Erdgas in Kontakt gebracht wird, **dadurch gekennzeichnet,** dass der mit Sauerstoff beladene Erdgasstrom anschliessend mit einem Katalysator (18) in Kontakt gebracht wird, wobei der Sauerstoff im kontinuierlichen Betrieb ohne Zugabe eines weiteren Stoffes mit Kohlenstoff und Wasserstoff chemisch verbunden wird, und dass der dadurch deoxidierte Erdgasstrom einem Verbraucher (23) zugeführt wird.

2. Verfahren nach Anspruch 1, dadurch gekennzeichnet, dass der Kontakt zwischen Wasser und Erdgas im Gegenstrom stattfindet.

3. Verfahren nach Anspruch 1, dadurch gekennzeichnet, dass der Kontakt zwischen Wasser und Erdgas im Gleichstrom stattfindet.

4. Verfahren nach Anspruch 1 bis 3, dadurch gekennzeichnet, dass der mit Sauerstoff beladene Erdgasstrom vor dem Kontakt mit dem Katalysator aufgewärmt wird.

5. Verfahren nach Anspruch 1 bis 4, dadurch gekennzeichnet, dass während des Anfahrens bis zum kontinuierlichen Betrieb das Aufwärmen des Ergasstromes und die Zündung des Katalysators durch Zugabe (19) von sauerstoffhaltigen oder brennstoffhaltigen Stoffen unterstützt wird, wobei diese Zugabe im kontinuierlichen Betrieb wieder abgestellt wird.

6. Verfahren nach Anspruch 5, gekennzeichnet durch Zugabe von Luft als sauerstoffhaltigem Stoff.

7. Verfahren nach Anspruch 5, gekennzeichnet durch Zugabe von Methanol.

8. Anlage zur Durchführung des Verfahrens nach Anspruch 1 mit einer Kontakteinrichtung (3) für Wasser und Erdgas, dadurch gekennzeichnet, dass der Kontakteinrichtung, welche der mit Sauerstoff beladene Erdgasstrom (7) verlässt, mindestens ein Katalysatorbett (18) nachgeschaltet ist, und dass eine Verbindungsleitung (22) vom Katalysatorbett zu mindestens einem Erdgasverbraucher (23) vorgesehen ist.

9. Anlage nach Anspruch 8, dadurch gekennzeichnet, dass die Kontakteinrichtung (3) für Wasser und Erdgas eine Gegenstromkolonne ist.

10. Anlage nach Anspruch 8, gekennzeichnet durch eine Gegenstrom-Kontakteinrichtung (3) für Wasser und Erdgas, welche eine rotierende Packung oder eine Kombination von parallel oder in Serie geschalteten rotierenden Packungen aufweist.

11. Anlage nach Anspruch 8, gekennzeichnet durch eine Gleichstrom-Kontakteinrichtung (3) für Wasser und Erdgas, welche einen statischen Mischer oder eine Kombination von parallel oder in Serie geschalteten statischen Mischern aufweist.

12. Anlage nach Anspruch 8, gekennzeichnet durch eine Gleichstrom-Kontakteinrichtung (3) für Wasser und Erdgas, welche eine Serpentine oder eine Kombination von parallel oder in Serie geschalteten Serpentinen aufweist.

5

**13.** Anlage nach Anspruch 8, dadurch gekennzeichnet, dass die Kontakteinrichtung (3) für Wasser und Erdgas aus einer Kombination von Gleichstrom- und Gegenstrom-elementen besteht, welche Elemente parallel und in Serie geschaltete Kolonnen, rotierende Packungen, statische Mischer oder Serpentinen sind.

**14.** Anlage nach Ansprüchen 8 bis 13, dadurch gekennzeichet, dass dem Katalysator ein Gegenstrom-Wärmetauscher (13) vorgeschaltet ist, in welchem das mit Sauerstoff beladene Erdgas aufgewärmt wird, durch das aus dem Katalysator kommende warme und sauerstoffreie Erdgas, welches anschliessend an den Wärmetauscher (13) in die Verbindungsleitung (22) und zum Verbraucher (23) geführt ist.

**15.** Anlage nach Ansprüchen 8 bis 14, dadurch gekennzeichnet, dass dem Katalysator eine steuerbare Heizung (14) vorgeschaltet ist.

**16.** Anlage nach Anspruch 15, dadurch gekennzeichnet, dass eine Steuereinrichtung (31) vorgesehen ist, welche mit der Heizung (14) und mit Sensoren (26, 27, 28, 29) verbunden ist.

Fig.1

EP 0 458 737 A2

# Fig.2